# EUROPÄISCHE PATENTSCHRIFT

(11) **EP 0 576 389 B1**
(45) Veröffentlichungstag und Bekanntmachung des Hinweises auf die Patenterteilung: **16.10.1996**
(21) Anmeldenummer: 93710013.9
(22) Anmeldetag: 22.06.1993
(51) Int. Cl.: C05F 17/00, C05F 3/00, C05F 7/00

(54) **Verfahren zur Umwandlung von Gülle, Jauche und Hausabwässern in Düngerkompost**
Process for transforming liquid manure and sewage into compost
Procédé de transformation du purin et des eaux ménagères usées en compost

(30) Priorität: 26.06.1992 DE 4220947
(43) Veröffentlichungstag der Anmeldung: 29.12.1993
(73) Patentinhaber: Drews, Manfred, Dr. Prof., D-25436 Tornesch (DE)
(72) Erfinder: Drews, Manfred, Dr. Prof., D-25436 Tornesch (DE)

(56) Entgegenhaltungen:
- DE-A- 4 006 239
- FR-A- 2 616 296
- GB-A- 1 498 938
- DATABASE WPI Section Ch, Week 9305, Derwent Publications Ltd., London, GB; Class D16, AN 93-043058 & SE-A-9 201 674 (FORS K) 13. September 1992
- DATABASE WPI Section Ch, Week 9305, Derwent Publications Ltd., London, GB; Class D16, AN 93-043058 & SE-A-9 201 674

## Beschreibung

Verfahren zur Kompostierung von Gülle,Jauche und Hausabwässern unter Zuhilfenahme von ungehäckseltem Weizenstroh.

Das überwiegend übliche Standardverfahren der Gülle- und Jaucheverwertung ist die Flüssigausbringung auf das Feld, im Fall von Haushaltsabwässern die Zusammenführung und Verwertung in zentralen Kläranlagen mit Klärschlamm als Reststoff.Die bekannten Nachteile dieser Standardverfahren selbst bei ordnungsgemäßer Anwendung sind:

### Im Fall von Gülle und Jauche:

- Geruchsemissionen bei Lagerung und Ausbringung.
- Abgasung von Ammoniak bei der oberflächigen Feldausbringung bedeutet Umweltbelastung und wirtschaftlichen Stickstoffverlust.
- Versickern von Nahrstoffen in den Untergrund aufgrund zeitlich nicht optimaler Abstimmbarkeit der Gülle- und Jaucheausbringung an den Pflanzenbedarf bedeutet wirtschaftlichen Verlust und bezüglich des Nitrateintrags in das Grundwasser einen Umweltschaden.
- Hohe Kapitalkosten für die Güllelagerung (Lagerbehälter je nach Viehbestand von 200-8000 m³),Güllebehandlung (Mixer,Pumpen,Zuschlagstoffe) und die Gülleausbringung (Tankwagen).

### Im Fall von Hausabwässern:

- Hohe Transportkosten für die Zusammenführung der Hausabwässer oder im Fall hauseigener Vorkläranlagen der Hausklärschlämme in regionalzentralen Kläranlagen.
- Wegen Vermischung der verschiedenen Abwasserherkünfte eine durchgehende Schadstoffbelastung des zentral anfallenden Klärschlamms und als Folge hohe Klärschlammentsorgungskosten und ungelöste Entsorgungsprobleme (Lit. 1).

Wegen der eminenten Nachteile der bisher üblichen Standardverfahren hat es zahlreiche Weiterentwicklungen gegeben,die aber bisher nicht den Durchbruch zur breiteren Anwendung gefunden haben.Die Hauptrichtungen dieser Entwicklungen sind:
- Die anaerobe Vergarung von Gülle und Abwasser zu Methan (Biogas) als Energieträger und zu Reststoffen als Dünger.Als Energieträger ist Biogas ohne Subventionen bisher nicht konkurrenzfähig (Lit.2). Im Fall der Zusammenführung der Gülle zu zentralen Biogasanlagen und des Rücktransports der Dünngülle zur Feldausbringung entstehen relativ hohe Transportkosten, ohne daß im Vergleich zu den Kosten der konventionellen Vollgülleausbringung wesentliche Einsparungen erfolgen könnten.
- Eliminierung des Ammoniakstickstoffs aus Gülle inform des unlöslichen Magnesium-Ammonium-Phosphats (MgNH₄PO₄) und Ausbringung der Restgülle nach konventionellem Verfahren,als sogenanntes MAP-Verfahren zum Patent angemeldet (Lit.3).
- Gülletrocknung. Hauptelemente dieses in mehreren Varianten bekannten Verfahrens sind die Trennung der Feststoffe von der flüssigen Phase durch Separatoren/Dekanter,die Trocknung der Feststoffe in Trommeltrocknern oder ähnlichen bekannten Vorrichtungen und die Ausbringung der flüssigen Phase mit prinzipiell gleicher und deshalb auch gleich aufwendiger Technik wie bei der Direktausbringung von Vollgülle.Das Trocknungsverfahren ist relativ kapitalaufwendig und deshalb nur bei sehr hohem Durchsatz und hohen Preisen für den Trockendünger gegenüber der Vollgülledirektausbringung konkurrenzfähig.
- Kompostierung von Gülle unter Zusatz von Stroh und/oder anderen Zuschlagstoffen.Die Kompostierung ist das älteste und variantenreichste Alternativverfahren zur unmittelbaren Feldausbringung von Gülle,Jauche und Abwasser.Allgemeine Bekanntheit erreichte sie schon in den 20er Jahren dieses Jahrhunderts durch Arbeiten Rudolf Steiners zur biologisch-dynamischen Wirtschaftsweise und im britischen Einflußbereich als sogenannte Indore-Methode nach A.Howard (Lit.5). Spätere Entwicklungen setzen an einzelnen Schwachpunkten dieser klassischen Kompostierverfahren an,die vor allem in dem hohen Arbeitsaufwand bestehen,aber auch in Qualitätsproblemen,in Nährstoffverlusten inform von Ammoniakabgasung und Sickersaft,in langer Reifungsdauer (6 Monate und mehr) und großem Platzbedarf für Kompostmieten und-gruben.Die meisten der späteren Verfahren bezwecken eine verbesserte und mechanisierte Sauerstoffversorgung durch Belüftung (Lit.6,7,8).Ein Verfahren setzt auch Solarenergie ein, indem Gülle in folienüberdachten Häusern in großen Becken getrocknet und kompostiert wird (Lit.9).Andere Verfahren zielen auf eine Beschleunigung der Rotte und Qualitätsverbesserung des Komposts durch spezielle Kombination der Roh- und Zuschlagstoffe ab (Lit. 10,11).

Die meisten der vorstehenden Alternativverfahren zum Standard -einschließlich auch der neueren Kompostierungsverfahren- zeichnen sich durch einen hohen Mechanisierungsgrad und dementsprechend hohen Kapitalaufwand aus,ohne daß dieser Mehraufwand durch eine zumindest gleichwertige Senkung des Arbeitsaufwandes oder wirtschaftlich verwertbare Qualitätsverbesserung aufgewogen werden konnte.Die wesentlichen Verfahrensunterschiede zu neueren alternativen Güllekompostierungsverfahren werden am Schluß dieser Beschreibung dargestellt.
Die im Patentanspruch angegebene Erfindung hat das Ziel, die bekannten Nachteile bei den Standardverfahren der Gülle-,Jauche- und Abwasserentsorgung zu überwinden,ohne dabei einen hohen Kapital- und Personalaufwand zu betreiben.Im einzelnen wird das auf folgende Weise erreicht:

### - Weitgehende Mechanisierung und Automatisierung bei geringem Kapitalaufwand

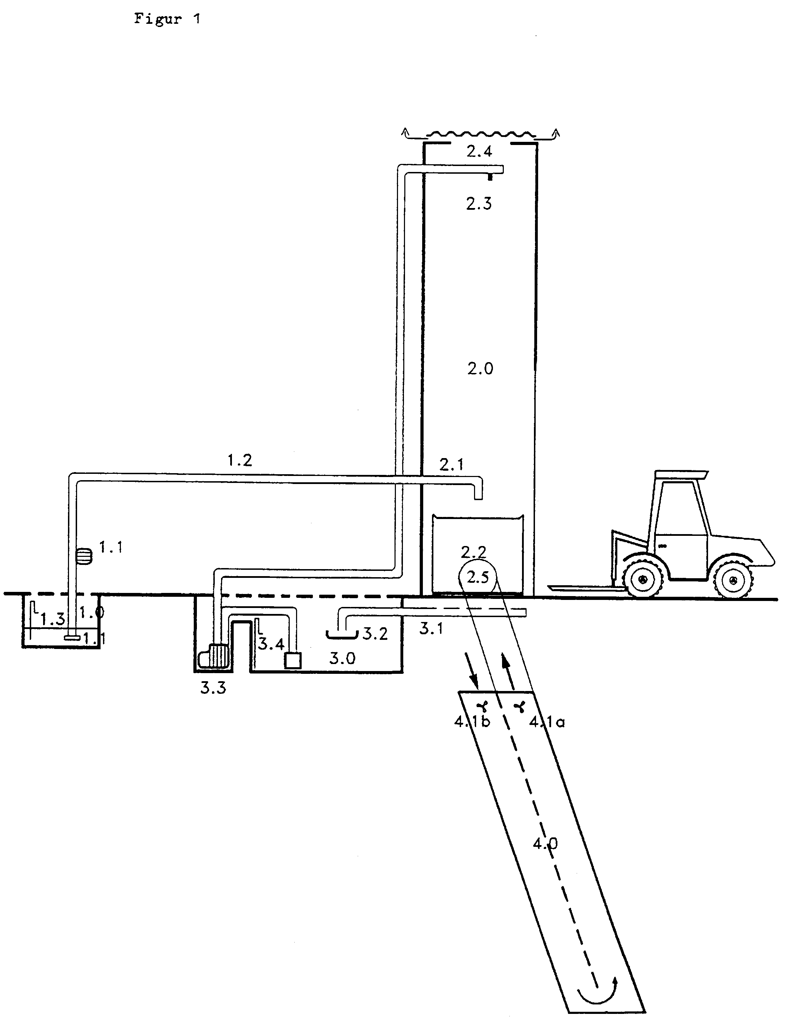

Fig. 1 veranschaulicht Art und Anordnung der zu diesem Verfahren erforderlichen Anlagen: Aus einer (meist vorhandenen) Sammelgrube (1.0) direkt am oder unter dem Stall bzw.Haus werden die Gülle,Jauche und Hausabwässer täglich im Umfang ihres Anfalls von einer Pumpe bekannter Bauarten (1.1) über ein Rohr (1.2) durch eine Öffnung des Turms (2.1) auf den Kompost (2.2) in der Gitterboxpalette gefördert.Die intervallweise Förderung ( ca. 10 s) wird durch einen Niveauregler (1.3) im Sammelbehälter gesteuert.Aus einem Stall mit z.B. 30 Kühen und 60 Liter Gülleanfall je Kuh und Tag werden so im 24-Stunden-Betrieb im Beispiel rd. 1,8 m³ auf die Kompostpalette (2.2) gebracht.

Die Frischgülle,Jauche und Hausabwasser sickern unter Zurücklassung von Feuchtigkeit und Feststoffen durch das organische Filter- und Fermentiermaterial der Palette (2.2) und treten am Boden und teilweise auch an den Seiten als Dünngülle (=Filtrat) aus.Über eine am Boden eingelassene Dränage (3.1) läuft die Dünngülle unter Flur im eigenen Gefälle in den Filtratbehälter (3.0),der gegen Grobstoffe zusätzlich durch ein Feinsieb (3.2) gesichert ist.Aus dem Filtratbehälter (3.0) wird die Dünngülle (= Filtrat) über eine Saug- und Druckpumpe mit Druckkessel bekannter Bauart (3.3) auf die Sprühdüse im oberen Teil des Turms (2.3) gedrückt und dort fein versprüht.Durch den Füllstandsmesser wird der Pumpenbetrieb automatisch geregelt (3.4). Das Volumen des Filtratbehälters könnte bei täglichem Betrieb der Trocknung im Turm auf ca.die Hälfte des täglichen Frischgülleanfalls beschränkt sein;im Beispiel eines 30-Kühe-Bestandes also auf rd. 1 m³. Zur Überbrückung kalter und feuchter Tage mit geringem Wirkungsgrad der Solartrocknung sollte die Speicherkapazität des Filtratbehälters (3.0) aber wesentlich größer bemessen sein. Der Fermentier- und Trocknungsturm (2.0) als Kernstück der Anlage hat eine Höhe von ca. 6m:nicht wesentlich niedriger,um eine genügende Verdunstung des oben (2.3) eingesprühten Filtrats im aufsteigenden Luftstrom zu ermöglichen,aber auch nicht wesentlich höher,weil ein Rest des Flüssigkeitsnebels auf den Rohkompost in der Palette (2.2) niederrieseln soll,um eine gleichmäßige Durchfeuchtung und Nährstoffeintragung in den Kompost zu gewährleisten und eine Abgasung von Ammoniak zu vermeiden.Der Turm ist nach oben durch ein Dach abgedeckt,in das eine Abluftvorrichtung eingebaut ist,die nur (feuchte) Luft austreten läßt und vom Luftstrom mitgerissene Sprühnebel zuvor nach innen abscheidet (2.4).Die Bodenfläche des Turms beträgt im Beispiel der kleinsten Turmkapazität ca. 1,50 x 1,50 m als Standplatz für die Kompostpalette (2.2).Die Maße der Palette sind zwecks allseitigem Luftzutritt und bequemer Einbringbarkeit in den Turm etwas kleiner,also im Beispiel ca. 1,20 x 1,20 m bei einer Höhe von ebenfalls ca. 1,20 m.

Die Palette (2.2) wird aus dem Turm entnommen und auf einem Lagerplatz entleert. Am Lagerplatz sollte der Kompost vor Regen geschützt sein.

Ist die Fermentier- und Trocknungskapazität des kleinsten Turmes nach vorstehendem Beispiel in Figur 1 für größere Gülle-,Jauche- und Abwassermengen zu klein,kann eine Kapazitätserweiterung durch Verbreiterung des Turms erfolgen,sodaß die Bodenfläche Platz für 2 oder mehr Kompostpaletten bietet.Die einzelne Palette sollte nicht vergrößert werden,um eine gleichmäßige Durchfeuchtung und Durchlüftung des Paletteninhalts zu gewährleisten.

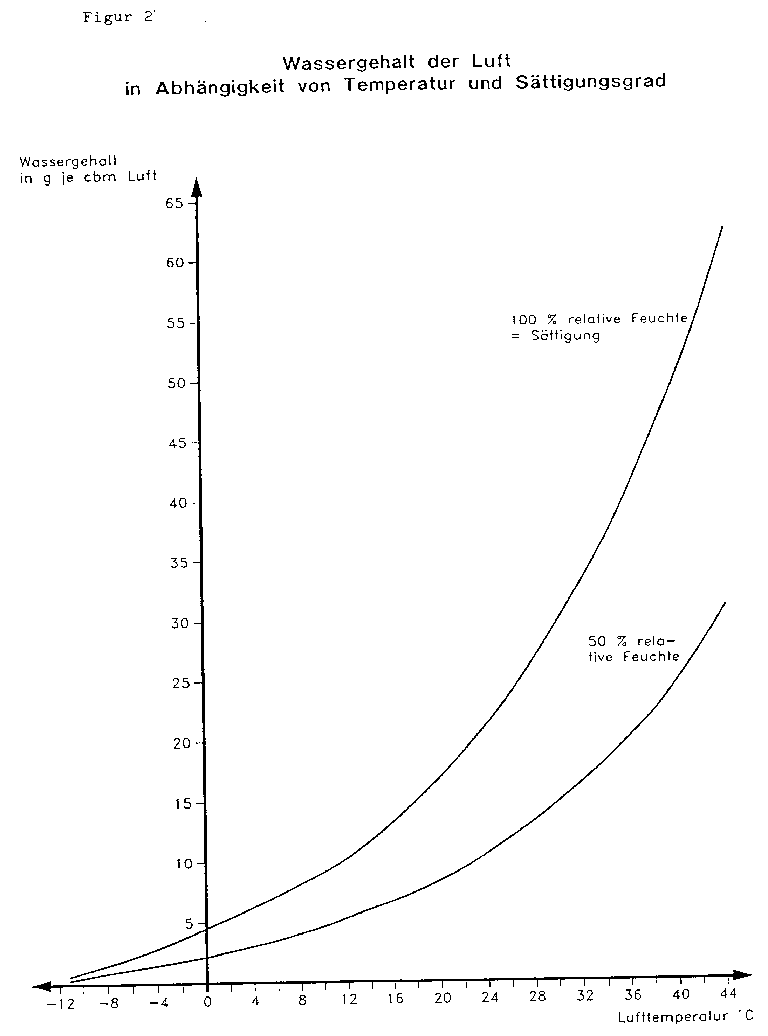

In einer Turmseite unmittelbar über dem Boden ist eine Öffnung (2.5) für die Zufuhr frischer (=sauerstoffreicher) und relativ trockener und warmer Luft aus dem solaren Warmluftkollektor (4.0) geschnitten.Der Kollektortunnel kann ein- oder wie im Beispiel der Figur 1 mehrbahnig ausgeführt sein,ausgerüstet mit einem Ventilator (4.1a) am Luftaustrit im Übergang zum Turm oder zusätzlich mit einem 2.Ventilator (4.1b) am Lufteingang wie im Beispiel der Figur 1.Ein- und Ausschaltung des Ventilatorbetriebs kann durch einen Temperaturdifferenzschalter automatisiert sein.Die Luftförderkapazität des oder der Ventilatoren soll im Beispiel der kleinsten Ausführung mindestens 4800 m³ je Stunde betragen.Die stündlich mögliche Wasserverdunstung bei 100% rel.Feuchte im Luftaustritt des Turms beträgt nach den Daten in Figur 2 z.B. bei Erwärmung durch Solarkollektor und mikrobielle Umsetzung um 15°C auf 25°C bei einer relativen Ausgangsfeuchte der Luft von 75% rd.60 kg.Bei Erwärmung um ebenfalls 15°C auf 30°C bei gleicher Ausgangsfeuchte der Luft (=rel.Feuchte) beträgt die stündliche Wasserverdunstung rd.100 kg.Allgemein ist die mögliche Wasserverdunstung im Turm nach den Daten in Figur 2 um so größer,je niedriger die relative Feuchte und je höher die Temperatur der Außenluft ist und -des weiteren- je höher diese Luft durch den Solarkollektor und den Fermentationsprozeß im Kompost erwärmt wird.

Die für das Verfahren gemäß Erfindungsanspruch typischen Anlagen Nr. 1 bis 4 in Figur 1 erfordern einen weitaus geringeren Kapitalaufwand als das bisher übliche Standardverfahren der Gülleentsorgung und andere Spezialverfahren.Trotzdem ist der Arbeitsaufwand gering.Er beschränkt sich im wesentlichen auf das Ein- und Ausbringen der Kompostpalette (2.2) in den Turm (2.0).Damit ist das Verfahren speziell auch in Kleinbetrieben wirtschaftlich einsetzbar,die bisher wegen des hohen Kapitalaufwandes bei der üblichen Güllelagerung und -ausbringung nicht einmal die arbeitswirtschaftlichen Vorteile der Güllewirtschaft gegenüber dem Einstreu- und Festmistverfahren nutzen konnten.

### -Geringe Ammoniakabgasung und geringe Stickstoffverluste durch Fixierung im Kompost

In Gülle liegt Stickstoff zu ca.50% und je nach Tierart auch mehr Anteilen als Ammoniumstickstoff vor,der Rest ist organisch gebunden (Lit.12).Ammonium,das gasförmig als Ammoniak austritt,entsteht in der 1.Phase des mikrobiellen Proteinabbaus.Erst in einem 2.Schritt unter Zutritt von Luftsauerstoff wird Ammonium mikrobiell über Nitrit zu Nitrat oxydiert (Lit. 13). Die nach dem Standardverfahren übliche direkte Feldausbringung ergibt relativ hohe Ammoniakverluste,die vor allem bei warmem,windigen Wetter und oberflächiger Ausbringung mehr als 60% des gesamten Ammoniumgehaltes betragen können (Lit.14).Abgasendes Ammoniak bedeutet nicht nur wirtschaftlichen Verlust an Pflanzennährstoff,sondern stellt auch eine erhebliche Umweltbelastung dar (Lit.14,15).

Zur Vermeidung solcher Stickstoffverluste inform von Ammoniakabgasung nutzt die Erfindung eine spezielle physikalische Eigenschaft des Ammoniaks,nämlich seine außerordentlich hohe Bindungskraft an Wasser (Lit. 16,S.371). In der Kompostpalette (Fig. 1,Nr.2.2) wird nicht nur durch den quasi kontinuierlichen Eintrag von wasserreicher Frischgülle,Jauche oder Abwasser,sondern auch durch die kontinuierliche Filtratversprühung (2.3 in Fig.1) ein ständig feuchtes und wegen des Wärmeverbrauchs für die Verdunstung relativ kühles Milieu geschaffen,das eine wesentliche Ammoniakabgasung nicht zustandekommen läßt.Das gilt auch für die aus der Sprühdüse (2.3) herabrieselnden Filtrattröpfchen,die im aufsteigenden Gegenluftstrom zwar aufkonzentriert,aber nicht bis zur Überschreitung der Ammoniak-Absorptionsschwelle getrocknet werden.Damit gewinnt der Fermentationsprozeß Zeit für die 2.Umwandlungsphase,in der Ammoniumstickstoff aufgrund der intensiven Belüftung im Turm in andersartige Stickstoffverbindungen umgewandelt wird , die überwiegend nicht flüchtig sind:
- Bakterielles Eiweiß,
- schwer abbaubare Ligno-Proteine (Lit.17,S.394 ff.),
- Magnesiumammoniumphosphat (MgNH₄PO₄) (Lit.16,S.452) als nichtlösliches Ammoniumsalz aus mineralisierten Phosphor-,Magnesium- und Ammoniumverbindungen im Güllefiltrat,
- Nitratstickstoff (-NO₃).

Nach 8-10 Tagen ist dieser Prozeß so weit fortgeschritten,daß durch Trocknung des Komposts auf unter 30% Restfeuchte nur noch wenig Ammoniak freigesetzt werden kann.Optisch ist dieser Zustand an einer Schrumpfung des ursprünglichen Volumens und einer dunkleren Färbung des ursprünglich hellfarbenen Weizenstrohs zu erkennen.Die Trocknung schränkt den weiteren biologischen Abbau stark ein,sodaß der Kompost in dieser Form bis zur beliebigen späteren Feldausbringung ohne Nährstoffverluste durch Abgasung und Sickersaft lagerfähig ist.

### - Keine Geruchsbelästigung

Durch eine intensive Belüftung sowohl der Kompostpalette als auch des versprühten Filtrats im Turm (2.0) und die derart unmittelbare Verarbeitung der frischen Gülle,Jauche und Hausabwasser können im Unterschied zur konventionellen Güllelagerung keine anaeroben Faulprozesse entstehen;schon in der Frischgülle,Jauche und Hausabwasser enthaltene Geruchsstoffe werden schnell oxydiert.Bei der Feldausbringung ist der Kompost praktisch geruchsfrei.

### - Pflanzenbautechnische Vorteile

- Wegen des im Vergleich zu Gülle um den Faktor 10 verringerten Gewichts und der freieren Wahl des Ausbringungstermins keine Boden- und Bestandsschäden durch hohen Reifendruck.
- Kein Verkrusten oder Verätzen von Pflanzenbeständen und keine Geschmacksbeeinträchtigung von Futterpflanzen.
- Beim Kompost ist durch den vorhergehenden Kohlenhydratabbau ein engeres C:N-Verhältnis eingetreten ,sodaß es nicht wie bei einer kombinierten Stroh-Gülle-Düngung (Lit. 18) zu einer Ertragsdepression durch "Stickstoffsperre" im Boden kommen kann.
- Aus Kompost werden die in ihm gebundenen Nährstoffe nach Ausbringung langsamer freigesetzt als aus Gülle.Wegen seiner Langzeitwirkung kann die Kompostdüngung jährlich auf einmal vorgenommen werden und nicht wie die Gülle- und Mineralstoffdüngung auf meherere Gaben verteilt.
- Weil der relativ trockene Kompost praktisch unbegrenzt verlustlos lagerfähig ist,kann für die Feldausbringung der pflanzenbautechnisch günstigste Termin abgewartet werden.
- Gegenüber allen zentralen Formen der Gülle- und Abwasserentsorgung hat die Kompostherstellung unmittelbar am Ort des Anfalles der Gülle und des Abwassers den Vorteil,daß er nicht mit Schadstoffen durch Vermischen mit anderen Herkünften belastet sein kann. Im Kompost aus dem eigenen Betrieb bzw.Haushalt ist nur das drin,was man selbst auch hineingetan hat.

Zum Stand der Technik bei der Güllekompostierung werden folgende Druckschriften zitiert:
DE 3907751 C1
DE 4111204 A1
DE 4006239 A1
DE 4001855 A1
DE 3805864 A1
DE 3725127 A1
DE 3630637 A1
DE 3624234 A1
DE 3609162 A1

Von dieser bekannten Technik unterscheidet sich das hier beschriebene Verfahren sowohl hinsichtlich der Aufgabe als auch der Lösung erfindungsgemäß in folgender Weise:
1. Alle Kompostierungsverfahren der zitierten Druckschriften unterscheiden sich von dem hier beschriebenen Verfahren in der Behandlung des Überschußwassers der Gülle: Während hier das Überschußwasser als Dünngülle im Kopf des Fermentier- und Trocknungsturms versprüht wird und im Aufwind aus einem solaren Warmluftkollektor verdunstet,wird in den zitierten Verfahren grundsätzlich anders vorgegangen:
   Entweder wird die Gülle mit saugfahigen Trockenstoffen so weit aufgemischt,daß ein kompostierfahiges Substrat mit nur noch ca.60-65% Wassergehalt entsteht und dadurch kein ungebundenes Überschußwasser verbleibt (DE 3624234A1,3725127A1,3605864A1,4111204A1, 4006239 A1).
   Diese Aufmischverfahren mit zugesetzten Trockenstoffen bedeuten im Unterschied zum hier dargestellten Verfahren:
   - Hoher Zusatzstoffbedarf ( = etwa die dreifache Trockenstoffmenge wie in Gülle mit 10% Trockensubstanz).
   - Hoher technischer Aufwand für das Mischen mit den Trockenstoffen.
   - Hoher technischer Aufwand für die Rückführung von Sickerwasser in den Mischprozeß.
   - Hoher Zeitaufwand,wenn Sickerwasser in den Kompostierungsprozeß zurückgeleitet wird (speziell bei DE 3805864A1).

   Oder wird das Überschußwasser der Gülle nicht durch zugesetzte Trockenstoffe gebunden,sondern als Sicker- und Ablaufwasser entweder wie konventionell bei Vollgülle aufs Feld gefahren (DE 3630637A1) oder einer weiteren biologischen Klärung unterzogen und danach als Brauchwasser verwandt (DE 4001855A1).
   Unterschiede zum hier beschriebenen Verfahren:
   - Hoher technischer Aufwand bei der Sickerwassererfassung und -verwertung.Das Ausfahren von Dünngülle bzw. Überschußwasser (DE 3630637A1) auf das Land verursacht ähnlich hohe Kosten wie die konventionelle Ausbringung von Vollgülle.Die gesonderte Kompostierung nur der Feststoffe ist dann ein zusätzlicher Aufwand,der das Gesamtverfahren gegenüber der konventionellen Vollgülleausbringung teurer macht.Dieser Nachteil gilt auch für alle anderen bekannten Verfahren,die Feststoffe aus Gülle separieren und die Restflüssigkeit -mit oder ohne Nachbehandlung- aufs Feld bringen oder in die Kanalisation leiten müssen.
   - Die speziell bei DE 4001855A1 durch biologische Denitrifikation angestrebte vollständige Stickstoffentfernung belastet inform von abgasendem Lachgas (N₂O) die Umwelt.Außerdem ist der Stickstoff als Pflanzennährstoff verloren.
2. Außer dem verfahrenstechnisch und zweckgerichtet erheblichen Unterschied der Wasserüberschußbeseitigung aus der Gülle ist in den zitierten Schriften auch ein weiterer funktionaler Aspekt nicht erwähnt,der eine wesentliche Begründung für das neu entwickelte Verfahren ist: Die schnellstmögliche Eliminierung von Ammoniak bzw.Ammonium in der Gülle durch Umwandlung.Aus Güllekanälen,Güllekellern,Güllesilos und bei der Feldausbringung abgasendes Ammoniak ist ein Umweltgift und außerdem als Pflanzennährstoff verloren.Man kann das Abgasen von Ammoniak zwar in bekannter Weise (Lit. 19) durch Säurezusatz oder Verdünnen mit Wasser einschränken.Wirkungsvoller und weniger kostspielig ist aber die möglichst unmittelbar nach dem Anfall der Frischgülle erfolgende Umwandlung des Ammoniakstickstoffs in Bakterieneiweiß,Huminstoffe und mineralischen Nitratstickstoff( = Nitrifikation),weil der Stickstoff in diesen Formen nicht mehr luftflüchtig ist.Deshalb wird in dem hier dargestellten Verfahren die Frischgülle während ihres täglichen Anfalles kontiuierlich -also ohne umfangreiche Vorstapelung in Güllekellern oder -silos- auf die Strohpalette aufgebracht,sodaß beim Durchsickern durch das sperrige Stroh unter deutlich aeroben Bedingungen eine intensive Stickstoffumwandlung und Stickstoffbindung erfolgt und die im ersten Durchgang anfallende Dünngülle nur noch einen erheblich reduzierten Ammoniumgehalt hat.
3. Will ein Kompostierungsverfahren gegenüber der konventionellen Gülledirektausbringung konkurrenzfähig sein,muß es nicht nur nützlicher sein (im Sinne einer besseren Umweltverträglichkeit und besseren Stickstoffverwertung),sondern auch kostengünstig.Diese Notwendigkeit wird zwar in der Beschreibung einer zitierten Doppelanmeldung (DE 4111204A1 und 4006239A1) ausdrücklich anerkannt,aber tatsächlich nicht in verfahrenstechnisch sparsame Lösungen umgesetzt.Auch bei den anderen Verfahren wird ein relativ hoher Aufwand betrieben mit dem Nachteil,daß sich diese Verfahren gegenüber der konventionellen Direktausbringung von Vollgülle in der Praxis nicht haben durchsetzen können.Das hier dargestellte Verfahren unterscheidet sich durch erheblich geringeren Personalaufwand (nur für das Ein- und Ausfahren der Strohpalette in den Fermentier- und Trocknungsturm und Abladen auf dem Kompostlager bei im übrigen voll automatisierten Prozeß) und trotzdem nur geringen Investitionskosten (Turm,Solarkolektor und Dünngüllezwischenlager mit Pumpe).Dabei wird ein Kompost erzielt,der den Anforderungen an die Zwischenlagerung,Feldausbringung und Düngerwirkung vollkommen genügt:
   - Keine Ammoniakabgasung aufgrund vorhergehender Nitrifikation in der belüfteten Stroh-Kompost-Palette im Turm.
   - Wegen Vortrocknung im Turm kein nitratreiches Sickerwasser im Kompostlager.
   - Die Rotte des Kompostes -d.h. der bakterielle Um- und Abbau der Kohlenstoffkomponente unter Nutzung des Güllestickstoffs- ist zum Zeitpunkt der Feldausbringung mindestens so weit fortgeschritten,daß durch eine Nachrotte auf dem Feld kein bodenbürtiger Stickstoff in Anspruch genommen werden muß (keine "Stickstoffsperre" für das Pflanzenwachstum).

### Literatur

1. Trautz,d.:Klärschlamm im Landbau.In:Bauernblatt/Landpost vom 9.5.1992.
2. Anon.: Biogas:Umweltfreundlich,nachhaltig,aber noch zu teuer.In:AgraEurope Nr.24 vom 9.6.1992,Länderberichte,S.94. - Anon.:Energie aus Gülle und Abfall.In: Bauernblatt vom 8.2.1992,S.18.
3. MAP-GmbH:Gülleentsorgung und Stickstoffbeseitigung mit dem neuen MAP-Verfahren. Firmenprospekt,Eschweiler.
4. Wagner,P.:Verfahren zur Verwertung von Güllen,besonders von Schweinegüllen.Patentschrift DE 2934367 C2.
5. Howard,A.:Die Erzeugung von Humus nach der Indore-Methode.Hamburg 1948.
6. Stormbaugh,D.P. und White,R.K.:Aerobic Composting-New Built-Up Bed Technique.In: ASAE Publication Nr.275:Managing Livestock Wastes .Proc.3rd.intern.symposium on livestock wastes ,S.485f.
7. Hummel,J.W. und Wilson,G.B. :High-Rate Mechanized Composting of Dairy Manure.In: ASAE Publication Nr.275,1975,S.481-484.
8. Fa.Max Frost,Bohmte:Verfahren zur Kompostierung von Stroh-Flüssigmist-Gemengen (nach Patent Noggemann).
9. Horsfield,B.:Drying Dairy Wastes with Solar Energy.In:ASAE Publication Nr.275:Managing Livestock Wastes,S.478-480.
10.Newrzella,D.: Entwicklung eines Verfahrens zur Strohkompostierung unter Einsatz von Gülle ,Zuschlagstoffen und Hilfsmitteln für die Anwendung im Gemüsebau.In:Forschung und Beratung,Reihe C,Heft 45,Münster-Hiltrup 1988.
11.Schuchardt,F.: Ein Verfahren zur Kompostierung von Schweine-Flüssigmist unter Zusatz von Stroh und Perlit.In:Landbauforschung Völkenrode,35.Jg.(1985),Heft 1,S.11-19.
12.Steffens,G. und Vetter,H.:Mittelfristige Nährstoffbilanz und Nährstoffausnutzung bei Gülledüngung.Kali-Briefe, 17.Jg.(1985),S.441-460).
13.Mengel,K.:Ernährung und Stoffwechsel der Pflanze. 6.überarb.Auflage, Stuttgart 1984.
14.Bless,H.-G. und Matthey,J.:Gasförmige Stickstoffverluste aus der Gülledüngung vermeiden. In:Bauernblatt/Landpost vom 30.3.1991,S.1556.
15.Kuratorium für Technik in der Landwirtschaft: Ammoniak in der Umwelt.Schriftenreihe, Münster-Hiltrup 1991.
16.Hollemann,A.F. und Wiberg,E.:Lehrbuch der Anorganischen Chemie.81.-90.Auflage, Berlin und New York 1976.
17.Maiwald,K.:Beschaffenheit des organischen Bodenanteils.In:Handbuch der Bodenlehre, 1.Erganzungsband,Berlin 1939,S.377-439.
18.Gerth,H.:Kombinationsdüngung von Gülle und Stroh.In:Bauernblatt/Landpost vom 1.2.1992,S.37.
19.Oosthoek,J.,Kroodsma, W. und Hoeksma,P.:Betriebliche Maßnahmen zur Minderung der Ammoniakemissionen aus Ställen.In:Ammoniak in der Umwelt.KTBL-Schriftenreihe.Symposiumbericht 10.-12.10.1990,S.29.1-29.23.

## Patentansprüche

1. Verfahren zur Kompostierung von Gülle,Jauche und Hausabwässern unter Zuhilfenahme von ungehäckseltem Weizenstroh,gekennzeichnet durch folgende Maßnahmen:
a) Eine mit Weizenstroh gefüllte Gitterboxpalette (2.2 in Figur 1) wird in den unteren Teil eines Turmes (2.0) auf seinen Boden verbracht.Der Turm besitzt ein Dach (2.4),in das eine Abluftvorrichtung mit einem Tropfenabscheider eingebaut ist, und wird durch einen seitlich an seinem Fuß (2.5) mündenden Kanal,in dem sich ein solarer Wärmekollektor (4.0) und ein Ventilator (4.1) befindet,mit vorerwärmter Luft versorgt.
b) Die Gülle,Jauche und Hausabwässer werden kontinuierlich oder diskontinuierlich durch eine mittig oberhalb der Palette mündende Druckleitung (2.1) in den Turm eingeleitet.
c) Die aus der Palette (2.2) abfließende Dünngülle wird durch ein,im Boden des Turms eingelassenes ,durch Filter von Grobteilen geschütztes Dränrohr (3.1) in einen außerhalb des Turms unter Flur liegenden Dünngüllebehälter (3.0) abgezogen.
d) Aus dem Dünngüllebehälter (3.0) wird die Dünngülle bei Überschreiten einer Mindestfüllstandsmarke kontinuierlich oder diskontinuierlich abgepumpt (3.3)und über eine,im obersten Teil des Turms befindliche Sprühdüse (2.3) in den Turm versprüht.
e) Nach Abschluß der Kompostierung,die optisch an einer Dunkelfärbung und Volumenschrumpfung des mit Gülle,Jauche und Hausabwässern getränkten Weizenstrohs erkennbar ist,wird die Gülleeinleitung und die Dünngülleversprühung eingestellt und der Kompost wird durch Zuführung einer erhöhten Luftmenge auf unter 30 Gew.-% Wassergehalt getrocknet.
f) Die Gitterboxpalette (2.2) mit dem fertigen Kompost wird aus dem Turm entnommen und auf einen, vor Regen geschützten Lagerplatz entleert.

## Claims

1. Process for the composting of liquid manure,dung and house sewage by the utilisation of uncut wheat straw.The process is described as follows:
a. A latticework box pallet filled with wheat straw (2.2 in Figure 1) is placed on the floor of a tower (2.0).The tower has a roof (2.1) which is fitted with an air duct that has a built-in drip trap,and is supplied with warm air by means of a channel that opens sideways at the foot of the tower (2.5) which is fitted with a solar-thermo-commutator (4.0) and a ventilator (4.1).
b. The liquid manure,dung and house sewage is fed continuously or discontinuously into the tower by means of a pressure pipe (2.1) which opens centrally above the pallet.
c. The discharge of liquid manure from the pallet (2.2) is effected through a drainpipe (3.1) set in the floor of the tower which is connected to an underground liquid manure tank (3.0) located outside the tower.This drainpipe is fitted with a filter to prevent larger pieces of refuse from flowing into the drain.
d. The liquid manure will then be pumped out of the tank (3.0) when the minimum filling mark has been reached,either continuously or discontinuously (3.3),and will then be squirted out by means of a sprayer in the upper part of the tower (2.3).
e. After completion of the composting process,which can be ascertained optically through the darkening and shrinking of the wheat straw which has been satured with liquid manure,dung and house sewage,the manure feed process and the manure sprayer can be stopped and the compost dried by means of air blasting to uner 30% weight of water content.
f. The lattice box pallet (2.2) with the finished compost can then be removed from the tower and emptied over a storage area that is rain proof.

## Revendications

1. Méthode de compostage de lisier, purin et eaux sanitaires à l'aide de paille de blé non hachée, caractérisée par les dispositions suivantes :
a) Une palette-caisse en treillis remplie de paille de blé (2.2 dans la figure 1) est placée dans la partie inférieure d'une tour (2.0), sur le sol de celle-ci. La tour a un toit (2.4) dans lequel un dispositif d'évacuation d'air avec pare-gouttes est installé. La tour est alimentée en air réchauffé par un conduit débouchant sur le côté de son pied (2.5). Un capteur thermique solaire (4.0) et un ventilateur (4.1) sont installés dans le conduit.
b) Le lisier, le purin et les eaux sanitaires sont dirigés de façon continue ou discontinue dans la tour par une conduite d'alimentation (2.1) débouchant au centre, au-dessus de la palette.
c) Une canalisation de drainage (3.1) encastrée dans le fond de la tour et protégée par des filtres qui retiennent les matiéres grossières évacue le lisier fluide s'écoulant de la palette (2.2) et le dirige vers une cuve de collecte (3.0) souterraine, installée hors de la tour.
d) Lorsque le repère de niveau minimum est dépassé, le lisier liquide est extrait de la cuve de collecte (3.0) par pompage continu ou discontinu et pulvérisé dans la tour par un diffuseur (2.3) se trouvant dans la partie supérieure de la tour.
e) Une coloration foncée et une diminution du volume de la paille de blé imprégnée de lisier, de purin et d'eaux sanitaires indiquent que le compostage est terminé. L'alimentation en lisier et la pulvérisation de lisier liquide sont alors interrompues. Une plus grande quantité d'air est introduite et le compost est séché jusqu'à ce que sa teneur d'eau soit inférieure à 30 % en poids.
f) La palette-caisse en treillis (2.2) contenant le compost terminé est extraite de la tour et vidée à un emplacement de stockage protégé de la pluie.
